# EUROPEAN PATENT APPLICATION

(11) **EP 2 993 824 A2**
(43) Date of publication of application: **09.03.2016**
(21) Application number: 15183888.5
(22) Date of filing: 04.09.2015
(51) Int. Cl.: H04L 12/24

(54) **FAULT MONITORING IN MULTI-DOMAIN NETWORKS**

(30) Priority: 08.09.2014 IN DE25542014
(71) Applicant: ALCATEL LUCENT, 92100 Boulogne-Billancourt (FR)
(72) Inventor: DESAI, Mayank, 560045 BANGALORE (IN); ANTONY, Saji, 560045 BANGALORE (IN)
(74) Representative: Sciaux, Edmond

(57) **Abstract**

The present subject matter relates to fault monitoring in multi-domain networks. In an example, alarm messages associated with multiple network entities in the multi-domain network are received. Upon receiving the alarm messages, state information of network entities traversed by services across the multi-domain network prior to receiving the alarm messages is acquired. The state information of the network entities for each of the services comprises hierarchical relationships between physical level entities, logical level entities, and service level entities traversed by a respective service. A network entity is identified from the acquired state information that matches with the faulty network entity corresponding to each of the alarm messages. Services that are impacted by the faulty network entity are determined based on traversing the state information of the network entities, through the hierarchical relationships, from the identified network entity to the service level entities.

## Description

### FIELD OF INVENTION

The present subject matter relates to fault monitoring and, particularly, but not exclusively, to fault monitoring in multi-domain networks.

### BACKGROUND

Internet and Virtual Private Network (VPN) connectivity may be provided to users over a multi-domain network. A multi-domain network may include two or more networks of different domains interconnected with each other. An example of a multi-domain network for providing Internet or VPN connectivity may include an Internet Protocol (IP) / Multiprotocol Label Switching (MPLS) domain network overlaid on a core optical domain network. For the purpose of providing Internet or VPN connectivity, a plurality of layer 2 (L2) / layer 3 (L3) connectivity services may be passed over various network entities across the multi-domain network. The L2 / L3 connectivity services that may traverse the multi-domain network include Virtual Leased Line (VLL) services, Virtual Private LAN (VPL) services, and Virtual Private Routed Network (VPRN) services. A fault in a network entity of any domain can impact one or more services traversing the multi-domain network, thereby adversely affecting the Internet or the VPN connectivity provided to the users.

### SUMMARY

This summary is provided to introduce concepts related to monitoring faults in multi-domain networks. This summary is not intended to identify features of the claimed subject matter nor it is directed to be used in determining or limiting the scope of the claimed subject matter.

In an implementation of the present subject matter, a method for monitoring faults in a multi-domain network is disclosed. The method includes receiving alarm messages associated with multiple network entities in the multi-domain network. Each of the alarm messages is indicative of a faulty network entity. The method also includes acquiring, upon receiving the alarm messages, state information of network entities traversed by services across the multi-domain network prior to receiving the alarm messages. The state information of the network entities for each of the services includes hierarchical relationships between physical level entities, logical level entities, and service level entities traversed by a respective service. The method further includes identifying a network entity from the acquired state information that matches with the faulty network entity corresponding to each of the alarm messages. The method further includes determining services that are impacted by the faulty network entity based on traversing the state information of the network entities, through the hierarchical relationships, from the identified network entity to the service level entities.

In accordance with another implementation of the present subject matter, a fault monitoring system is disclosed. The fault monitoring system includes a processor and a service impact analyzer coupled to the processor. The service impact analyzer may receive alarm messages associated with multiple network entities in the multi-domain network and, upon receiving the alarm messages, acquire state information of network entities traversed by services across the multi-domain network prior to receiving the alarm messages. Each of the alarm messages is indicative of a faulty network entity. The state information of the network entities for each of the services comprises hierarchical relationships between physical level entities, logical level entities, and service level entities traversed by a respective service. The service impact analyzer may further identify a network entity from the acquired state information that matches with the faulty network entity corresponding to each of the alarm messages, and determine services that are impacted by the faulty network entity based on traversing the state information of the network entities, through the hierarchical relationships, from the identified network entity to the service level entities.

In accordance with another implementation of the present subject matter, a non-transitory computer readable medium comprising instructions to implement a method for monitoring faults in a multi-domain network is disclosed. The method includes receiving alarm messages associated with multiple network entities in the multi-domain network. Each of the alarm messages is indicative of a faulty network entity. The method also includes acquiring, upon receiving the alarm messages, state information of network entities traversed by services across the multi-domain network prior to receiving the alarm messages. The state information of the network entities for each of the services includes hierarchical relationships between physical level entities, logical level entities, and service level entities traversed by a respective service. The method further includes identifying a network entity from the acquired state information that matches with the faulty network entity corresponding to each of the alarm messages. The method further includes determining services that are impacted by the faulty network entity based on traversing the state information of the network entities, through the hierarchical relationships, from the identified network entity to the service level entities.

### BRIEF DESCRIPTION OF THE FIGURES

The detailed description is described with reference to the accompanying figures. In the figures, the left-most digit(s) of a reference number identifies the figure in which the reference number first appears. The same numbers are used throughout the figures to reference like features and components. Some implementations of system and/or methods in accordance with implementations of the present subject matter are now described, by way of examples, and with reference to the accompanying figures, in which:
Fig. 1 schematically illustrates a network environment having an exemplary fault monitoring system, in accordance with an implementation of the present subject matter.
Fig. 2 illustrates an exemplary multi-domain network with network entities traversed by a service, in accordance with an implementation of the present subject matter.
Fig. 3 illustrates an exemplary method for monitoring faults in a multi-domain network, in accordance with an implementation of the present subject matter.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

### DESCRIPTION OF EMBODIMENTS

The present subject matter relates to fault monitoring in multi-domain networks. In accordance with the present subject matter, the fault monitoring in a multi-domain network includes service impact analysis, in which services that are traversing the multi-domain network and are impacted by faults in the multi-domain network can be determined. The fault monitoring, in accordance with the present subject matter, also includes root cause analysis, in which the root cause of the faults, i.e., the actual faulty network entity, in the multi-domain network that impacted the services can be identified.

The service traversing the multi-domain network may include layer 2 (L2) / layer 3 (L3) connectivity services, such as Virtual Leased Line (VLL) services, Virtual Private LAN (VPL) services, and Virtual Private Routed Network (VPRN) services. A VLL service includes an EPIPE L2 point-to-point service for Ethernet frames, a VPL service includes an L2 multipoint-to-multipoint Virtual Private Network (VPN) service, and a VPRN service includes an L3 Internet Protocol (IP) multipoint-to-multipoint VPN service. Such services may traverse the multi-domain network for providing Internet or VPN connectivity to users.

Each of the services traversing the multi-domain network may follow a route composed of a variety of network entities across the domains. The network entities may include network equipment, physical terminations, logical terminations, links, paths, and a service type. Examples of network equipment include physical elements, such as routers, switches, and multiplexers. The physical terminations include physical ports of the network elements. The links are physical connections established between physical terminations of the same network equipment or of two different network equipment. The logical terminations are the entry and exits points for a link, where the traffic enters and exits the link for providing a service. The logical terminations are hosted by the network equipment and may correspond to the physical terminations. The paths are the logical connections between two logical terminations and are deployed over a link. The service type may refer to the type of service traversing over various links and paths across the multi-domain network for providing Internet or VPN connectivity to the users.

In a multi-domain network, when a fault occurs in a network entity of any of the domains, an alarm message may be generated by the network entity. The alarm message is indicative of the faulty network entity. Due to the faulty network entity, one or more other network entities that are related to the faulty network entity may also turn faulty and generate respective alarm messages. For example, when a fault occurs in a link of a domain, the link along with a path deployed over the link may generate alarm messages. In addition, other paths, in the same or different domains, which are related to the path deployed over the faulty link may also turn faulty and generate alarm messages.

Conventionally, with multiple alarm messages generated by the network entities across different domains in the multi-domain network, the services that are traversing the multi-domain network which are impacted by the faulty network entities cannot be determined based on the multiple alarm messages. Also, conventionally, with the multiple alarm messages generated by the network entities across different domains, the root cause of the faults, i.e., the actual faulty network entity in the multi-domain network cannot be identified. The inability to find the services that are impacted and find the root cause of the faults or alarm messages may affect the recovery operation for automatic recovery of the faulty network entity and the impacted services in the multi-domain network.

The present subject matter describes systems and methods for fault monitoring in multi-domain networks. With the systems and the methods of the present subject matter, services that are traversing a multi-domain network and are impacted by faults in multiple network entities in the multi-domain network are determined, and the root cause of alarm messages from the multiple network entities that impacted the services is identified.

For the purpose of fault monitoring to determine the impacted services and identify the root cause, in an implementation, the alarm messages associated with multiple network entities in the multi-domain network are received. Each of the alarm messages is indicative of a faulty network entity. The alarm messages may be received directly from the corresponding faulty network entities in the multi-domain network, or from a database that stores the alarm messages associated with the fault network entities.

After receiving the alarm messages, state information of network entities traversed by the services across the multi-domain network is acquired. The state information is of the network entities traversed prior to receiving the alarm messages. The state information of the network entities for each of the services includes hierarchical relationships or associations between the network entities traversed by a respective service. In an example, the network entities may include physical level entities, logical level entities, and service level entities, and thus the state information of the network entities for each service includes hierarchical relationships between the physical level entities, the logical level entities, and the service level entities traversed by the respective service. The physical level entities may include network equipment, physical terminations, and links connecting the physical terminations. The logical level entities may include logical terminations and paths connecting the logical terminations. The service level entities may include service types associated with the paths. It may be noted that the service level entities may be at the highest level in the hierarchical relationships, and the physical level entities may be at the lowest level in the hierarchical relationships.

The hierarchical relationships between the network entities traversed by a service include relations between the network equipment, the physical terminations associated with the network equipment, the links between the physical terminations, the logical terminations corresponding to the physical terminations, the paths between the logical terminations, and the service types associated with the paths, traversed by the service. A hierarchical relationship between any two network entities may be understood as a parent-child relation between the two network entities. In an example, for a service, the hierarchical relationships may include parent-child relations indicative of: (1) a network equipment related to each physical termination through which the service is traversing; (2) physical terminations (an A-end and Z-end) related to each link through which the service is traversing; (3) logical termination related to each physical termination, if any; (4) logical terminations related to each path through which the service is traversing; (5) service type of the service related to each path, if any; and (6) child paths of each path, if any. It may be understood that the paths between the logical terminations may include child paths and parent paths in a parent-child relationship. A child path is understood to be a direct path between two logical terminations, and a parent path is understood to be an aggregate path of at least two child paths.

After acquiring the state information, a network entity is identified from the acquired state information that matches with the faulty network entity corresponding to each of the alarm messages. With this, multiple network entities corresponding to the alarm messages are identified in the acquired state information. Further, services that are impacted by the faulty network entity are determined based on traversing the state information of the network entities, through the hierarchical relationships, from the identified network entity to the service level entities. The hierarchical relationships in the acquired state information help in identifying all the service level entities related to the identified network entity. Services corresponding to such service level entities are therefore determined to be the services impacted by the faulty network entity.

Further, in an implementation, an actual faulty network entity in the multi-domain network is identified based on traversing the state information of the network entities, through the hierarchical relationships, from the service level entities associated with the determined services towards the physical level entities. The state information is traversed till a network entity that matches with the faulty network entity corresponding to the each of the alarm messages is reached. The hierarchical relationships in the state information help in identifying all the network entities related to the faulty network entities corresponding to the alarm messages. The network entity at the lower most level, based on the hierarchical relationships, is thus identified to be the actual faulty network entity. The actual faulty network entity is the root cause of the alarm messages from the multi-domain network.

The systems and the methods of the present subject matter facilitate users of Internet or a VPN connection to correlate the alarm messages generated from different domains in the multi-domain network for determining the services that are affected due to the faults or the alarm messages. With this, the information on the severity of the problem or the services that affected the Internet or the VPN connection can be provided, for example, to a service provider. Further, the systems and the methods of the present subject matter facilitate the users to find the root cause of the faults or the alarm messages from different domains. This may enable a substantially reduction in the number of alarm messages reported to the service provider, and also allow for recovery of the actual faulty network entity and the impacted services automatically without human intervention.

The systems and methods of the present subject matter are further described in conjunction with the following figures. It should be noted that the description and figures merely illustrate the principles of the present subject matter. It will thus be appreciated that those skilled in the art will be able to devise various arrangements that, although not explicitly described or shown herein, embody the principles of the present subject matter. Furthermore, all examples recited herein are principally intended to aid the reader in understanding the principles of the present subject matter. Moreover, all statements herein reciting principles, aspects, and implementations of the present subject matter, as well as specific examples thereof, are intended to encompass equivalents thereof.

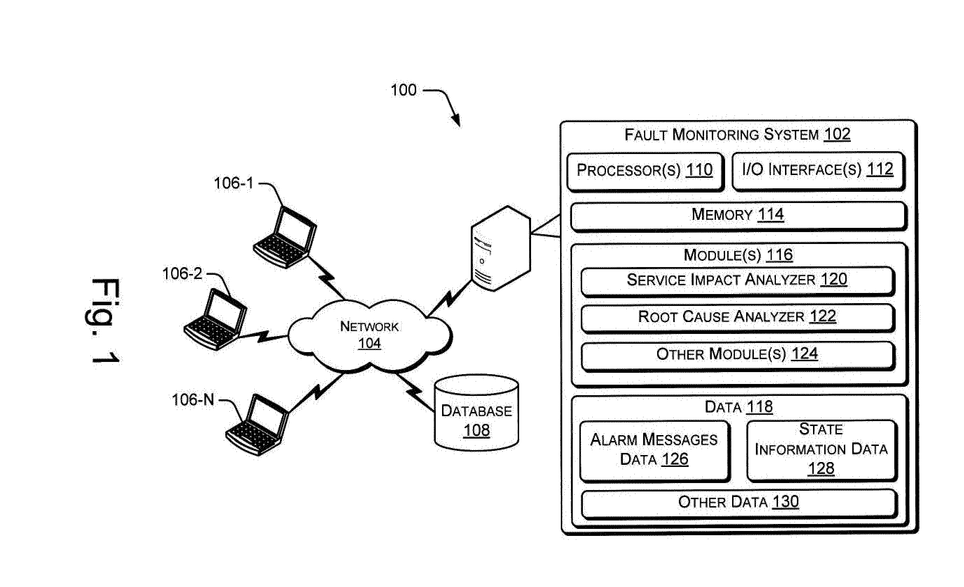

The manner in which the systems and the methods are implemented for fault monitoring in multi-domain networks shall be explained in detail with respect to the Figs. 1 to 3. While aspects of described systems and methods for fault monitoring in multi-domain networks can be implemented in any number of different computing devices, network environments, and/or configurations, the implementations are described in the context of the following exemplary system(s).

Fig. 1 schematically illustrates a network environment 100 having an exemplary fault monitoring system 102, in accordance with an implementation of the present subject matter. The fault monitoring system 102, hereinafter referred to as the system 102, may be implemented in various ways. For example, the system 102 may be a special purpose computer, a server, a mainframe computer, and/or any other type of computing device. The system 102 enables fault monitoring to determine services that are traversing a multi-domain network and are impacted by faults in multiple network entities in the multi-domain network are, and identify the root cause of alarm messages from the multiple network entities that impacted the services, in accordance with the present subject matter.

The system 102 may be communicatively coupled over a network 104 with multiple user devices 106-1, 106-2, ... , 106-N, as depicted in Fig. 1. The user devices 10b-1, 106-2, ... , 106-N may belong to multiple users, and are hereinafter collectively referred to as the user devices 106 and individually referred to as the user device 106. The user device 106 of a user may include a desktop computer, a laptop, a tablet, and the like, through which the user can access the system 102 for determining the impacted services and the root cause in a multi-domain network.

Further, as shown in Fig. 1, the system 102 may be communicatively coupled to a database 108 through the network 104. The database 108 may serve as a repository for storing data that may be fetched, processed, received, or generated by the system 102. The data includes, for example, state information of network entities traversed by the services across a multi-domain network, alarm messages received from various network entities in the multi-domain network, data associated with the impacted services determined by the system 102, and data associated with the actual faulty network entity identified as the root cause of alarm messages by the system 102. The data generated by the system 102 may be transmitted to the database 108, and the data stored in the database 108 may be fetched by the system 102, over the network 104. Although the database 108 is shown external to the system 102, it may be understood that the database 108 can reside in the system 102. Further, while Fig. 1 shows the database 108 and the system 102 communicatively coupled through the network 104, the database 108 may be directly coupled to the system 102.

In an implementation, the network environment 100 may be a cloud environment, and the system 102 may be a cloud server that can be access by the user devices 106 for determining the impacted services and the root cause of the alarm messages in a multi-domain network.

Further, the network 104 may be a combination of wired and wireless networks. The network 104 may be a collection of individual networks, interconnected with each other and functioning as a single network. Examples of such individual networks include, but are not limited to, Global System for Mobile Communication (GSM) network, Universal Mobile Telecommunications System (UMTS) network, Long Term Evolution (LTE) network, Personal Communications Service (PCS) network, Time Division Multiple Access (TDMA) network, Code Division Multiple Access (CDMA) network, Next Generation Network (NGN), Public Switched Telephone Network (PSTN), and Integrated Services Digital Network (ISDN). Depending on the technology, the network 104 includes various network entities, such as gateways and routers; however, such details have been omitted to maintain the brevity of the description. The user devices 106 work on communication protocols compatible with the network 104 to which the user devices 106 are coupled.

In an implementation, the system 102 includes processor(s) 110, I/O interface(s) 112, and a memory 114 coupled to the processor(s) 110. The processor(s) 110 may be implemented as one or more microprocessors, microcomputers, microcontrollers, digital signal processors, central processing units, state machines, logic circuitries, and/or any devices that manipulate signals based on operational instructions. Among other capabilities, the processor(s) 110 are configured to fetch and execute computer-readable instructions stored in the memory 114.

The functions of the various elements shown in the figure, including any functional blocks labeled as "processor(s)", may be provided through the use of dedicated hardware as well as hardware capable of executing computer-readable instructions. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or customized, may also be included.

The I/O interface(s) 112 may include a variety of software and hardware interfaces, for example, interfaces for peripheral device(s), such as data input output devices, referred to as I/O devices, storage devices, network devices, etc. The I/O device(s) may include Universal Serial Bus (USB) ports, Ethernet ports, host bus adaptors, etc., and their corresponding device drivers. The I/O interface(s) 112 facilitate the communication of the system 102 with various networks, such as the network 104, external databases, such as the database 108, and various communication and computing devices, such as the user devices 106.

The memory 114 may include any computer-readable medium including volatile memory, such as Static Random Access Memory (SRAM) and Dynamic Random Access Memory (DRAM), and/or non-volatile memory, such as read only memory (ROM), erasable programmable ROM, flash memories, hard disks, optical disks, and magnetic tapes.

The system 102 may also include module(s) 116 and data 118. The module(s) 116, amongst other things, are coupled to, and executable by, the processor(s) 110. The module(s) 116 include routines, programs, objects, components, data structures, etc., which perform particular tasks or implement particular abstract data types. The module(s) 116 may also be implemented as, signal processor(s), state machine(s), logic circuitries, and/or any other device or component that manipulate signals based on operational instructions.

Further, the module(s) 116 can be implemented in hardware, instructions executed by a processing unit, or by a combination thereof. The processing unit can comprise a computer, a processor, such as the processor 110, a state machine, a logic array or any other suitable devices capable of processing instructions. The processing unit can be a general-purpose processor which executes instructions to cause the general-purpose processor to perform the tasks, or the processing unit can be dedicated to perform the functions, in accordance with the present subject matter.

In another aspect of the present subject matter, the module(s) 116 may be machine-readable instructions which, when executed by a processor/processing unit, perform any of the described functionalities. The machine-readable instructions may be stored on an electronic memory device, hard disk, optical disk or other machine-readable storage medium or non-transitory medium. In one implementation, the machine-readable instructions can be also be downloaded to the storage medium via a network connection.

In an implementation, the module(s) 116 includes a service impact analyzer 120, a root cause analyzer 122, and other module(s) 124. The other module(s) 124 may include programs or coded instructions that supplement applications and functions of the system 102. The data 118, amongst other things, serves as a repository for storing data processed, received, associated, and generated by one or more of the module(s) 116. The data 118 includes, for example, alarm messages data 126, state information data 128, and other data 130. The other data 130 includes data generated as a result of the execution of one or more modules in the other module(s) 124. Although the data 118 is shown internal to the system 102, it may be understood that the data 118 can reside in an external memory which is coupled to the processor(s) 110.

The description hereinafter describes the determination of services that are impacted due to faults in multiple network entities in a multi-domain network, and the identification of the root cause of alarm messages from the multiple faulty network entities in the multi-domain network through the system 102, in accordance with an example implementation. The root cause is identified as a network entity that is actually faulty in multi-domain network, which triggered the alarm messages from other network entities related to the actual faulty network entity. The network entity that is actually faulty is referred to as the actual faulty network entity.

For the purpose of description herein, consider a case where a fault occurs in one of the network entities in any of the domains of the multi-domain network. As a result, several other network entities in connection with the faulty network entity turn faulty. In an example, a fault can occur in a network entity when the protocol running over that network entity goes down. All the faulty network entities in the multi-domain network thus generate respective alarm messages. Each of the alarm messages may include details, for example an entity identifier (ID), of the corresponding faulty network entity. In an implementation, the alarm messages from the faulty network entities are stored in the database 108. The database 108 may be a part of a network management system that managed the multi-domain network.

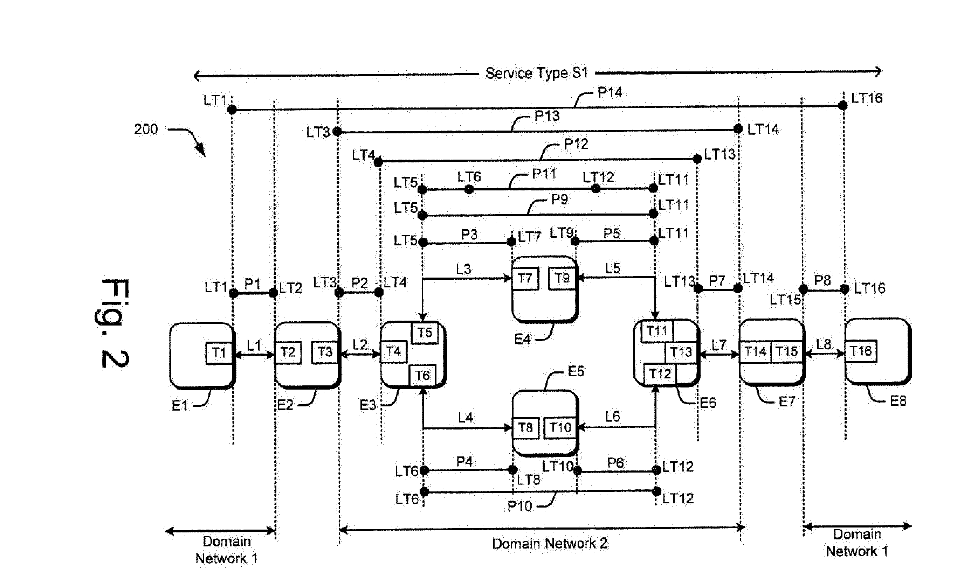

Further, the database 108 may also maintain the state information of the network entities traversed by the services across the multi-domain network. The state information of the network entities may include attributes of the network entities and the hierarchical relationships between the network entities traversed by the services. The details of the state information of the network entities are described in details later with respect to the description of Fig. 2. The state information of the network entities traversed by the services may be periodically updated in the database 108.

Further, a user who has subscribed to Internet or a VPN connection and is connected to the Internet or the VPN connection through a user device 106, can access the system 102 using the user device 106 for the purpose of determining the services impacted by the faulty network entities, and identifying the actual faulty network entity, based on the alarm messages.

In an implementation, the service impact analyzer 120 receives alarm messages associated with the faulty network entities in the multi-domain network. The service impact analyzer 120 may communicate with the database 108, and receive the alarm messages stored in the database 108. Further, the service impact analyzer 120 may store the alarm messages in the alarm messages data 126.

Upon receiving the alarm messages, the service impact analyzer 120 acquires the state information of the network entities traversed by the services across the multi-domain network. The state information is updated state information of the network entities that are traversed by the services prior to receiving the alarm messages. The service impact analyzer 120 may communicate with the database 108, and acquire the state information stored in the database 108. Further, the service impact analyzer 120 may store the state information of the network entities in the state information data 128.

The state information includes attributes of physical level entities, logical level entities, and service level entities of the multi-domain network. The state information also includes hierarchical relationships between the physical level entities, the logical level entities, and the service level entities of the multi-domain network. The attributes of the network entities may include entity ID, entity type, and such. The hierarchical relationships include parent-child relations from the physical level entities at lowest level in hierarchy up to the service level entities at the highest level in hierarchy. The attributes of the network entities and the hierarchical relationships therebetween in the state information can be traversed to determine related network entities, from the physical level entities to the service level entities, and vice versa.

After acquiring the state information, the service impact analyzer 120 determines the faulty network entity corresponding to each of the alarm messages, and, for each alarm message, identifies a network entity from the state information that matches with the corresponding faulty network entity. The service impact analyzer 120 may identify the network entity based on matching of the entity ID of the network entity in the state information with the entity ID indicated in the alarm message.

Further, for each of the identified network entities in the state information, the service impact analyzer 120 traverses the state information to identify the service level entities related to the respective identified network entity. For this, the service impact analyzer 120 traverses the state information through the hierarchical relationships from the respective identified network entity to the service level entities. After identifying the service level entities related to each of the identified network entities, the service impact analyzer 120 determines the services corresponding to each of the identified service level entities. Such services are thus determined as the services impacted by the faulty network entities that generated the alarm messages in the multi-domain network. In an example, a plurality of impacted services may be determined based on each alarm message. All the services determined based on the alarm messages may be aggregated to an exhaustive set of impacted services.

In an implementation, the root cause analyzer 122 identifies the actual faulty network entity in the multi-domain network. For this, the root cause analyzer 122 traverses the state information through the hierarchical relationships from the service level entity associated with each of the impacted services towards the physical level entities. For each of the impacted services, the state information is traversed from the associated service level entity till a network entity in the state information is reached that matches with the faulty network entity corresponding to each of the alarm messages. With this procedure of traversing the state information, the root cause analyzer 122 identifies all the network entities that match with the faulty network entities and have impacted the services across the multi-domain network. In an example, from all the identified network entities, the root cause analyzer 122 identifies the network entity at the lowest level of hierarchy as the actual faulty network entity, i.e., the root cause of the alarm messages from the multi-domain network.

Further, it may be noted that the hierarchical relationships between the network entities in the state information may be bidirectional. As a result, the service impact analyzer 120 or the root cause analyzer 122 may traverse cycle relations and be limited to an infinite loop of relations without progressing further. To avoid this, in an implementation, the service impact analyzer 120 keeps track of the network entities that are already traversed in the state information. Similarly, the root cause analyzer 122 keeps track of the network entities that are already traversed in the state information. For keeping track of the traversed network entities, after traversing a network entity, the service impact analyzer 120 or the root cause analyzer 122 may set a flag with a status indicative of a "traversed entity" for the network entity. In an example, the status indicative of a "traversed entity" may be '1'. Thus, the network entities for which the flag is set with that status are not traversed again.

Further, the state information of the network entities may include attributes of some network entities and hierarchical relationships therebetween that are not directly or indirectly related to any of the service level entities. Such network entities in the state information do not lead to service level entities and therefore do not assist in determining the impacted services. In an implementation, the service impact analyzer 120 identifies and ignores such network entities in the state information and, while traversing the state information, parses the network entities that lead to the service level entities. This may help in reducing the amount of processing and the time for determining the impacted services.

Further, in an implementation, the service impact analyzer 120 may set a flag with a status indicative of a "non-traversing entity" for a predefined set of network entities in the state information, and parse the network entities that are without the flag set with such a status. In an example, the status indicative of a "non-traversing entity" may be '1'. In an example, the predefined set of network entities may include network entities that are parent entities with one or more child entities. As a result, the service impact analyzer 120 does not parse the parent entities while traversing the state information. This may help in reducing the amount of processing and the time for determining the impacted services.

In an implementation, the information of the impacted services and the actual faulty network entity may be provided to the service provider of the Internet or the VPN connection subscribed by the user. The information can be provided by the user or by the system 102. The information may be received in a central system of the service provider. Based on the information provided to the service provider, the actual faulty network entity and the impacted services can be recovered automatically.

Fig. 2 illustrates an exemplary multi-domain network 200 with network entities traversed by a service, in accordance with an implementation of the present subject matter. As shown in Fig. 2, the multi-domain network 200 includes domain network 1 and domain network 2 over which the service may traverse for providing Internet or a VPN connection to users. Domain network 2 is a core network, and domain network 1 is overlaid of domain network 1. In an example, domain network 1 may be an IP / MPLS network and domain network 2 may be an optical network. The optical network may include, but is not restricted to, a Dense Wavelength Division Multiplexing (DWDM) network.

The network entities in the multi-domain network 200 include network equipments E1 to E8, physical terminations T1 to T16, logical terminations LT1 to LT16, links L1 to L8, paths P1 to P 14, and a service type S1. The network equipments E1 and E8 may be user premise equipments and are a part of domain network 1. The network equipments E3, E4, E5, and E6 may be core network equipment and are a part of domain network 2. The network equipments E2 and E7 may be edge network equipments and are a part of both domain network 1 and domain network 2. The physical terminations T1 to T16 are physical ports of the network equipments E1 to E8, as shown. The links L1 and L8 are physical connections between the physical terminations T1-T2 and T15-T16, respectively, and are a part of domain network 1. The links L2 to L7 are physical connections between the physical terminations T3-T4, T5-T7, T6-T8, T9-T11, T10-T12, and T13-T14, respectively, and a part of domain network 2.

Further, the paths P1 and P8 are logical connections between the logical terminations LT1-LT2 and LT15-LT16, respectively, and are a part of domain network 1. The paths P2 and P7 are logical connections between the logical terminations LT3-LT4 and LT13-LT14, respectively, that connects domain network 2 with the network equipments E2 and E7. The paths P3 to P6 are logical connections between the logical terminations LT5-LT7, LT6-LTB, LT9-LT11, and LT10-LT12, respectively, and are a part of domain network 2. Further, the path P9 is an aggregated path of the paths P3 and P5. The path P9 thus is referred to as a logical connection between the logical terminations LT5-LT11. Similarly, the path P10 is an aggregated path of the paths P4 and P6. The path P10 thus is referred to as a logical connection between the logical terminations LT6-LT12. Further, the path P11 is an aggregated path of the paths P9 and P10. The path P1 thus is referred to as a logical connection between the logical terminations LT5-LT11 through the logical terminations LT6 and LT12. Further, the path P12 is an aggregated path of the paths P11 and internal paths within the network equipments E3 and E6. The path P12 thus is referred to as a logical connection between the logical terminations LT4-LT13. The path P13 is an aggregated path of the paths P12, P2, and P7. The path P13 is referred to as a logical connection between the logical terminations LT3-LT14. Further, the path P14 is an aggregated path of the paths P13, P1, and P8. The path P14 is referred to as a logical connection between the logical terminations LT1-LT16. The path P 14 may be understood as the service path that is traversed by the service across the multi-domain network 200.

Further, the service type S1 refers to the type of service traversing over the multi-domain network 200. Although only one service type is shown in Fig. 2, in an implementation, the multi-domain network 200 includes a plurality of service types associated with the plurality of services traversing over the multi-domain network 200.

In an implementation, the state information of the network entities traversed by the service corresponding to the service type S1 in the multi-domain network 200 includes attributes of the network entities and the hierarchical relationships between the network entities. The attributes of the network entities include network entity related details, such as entity ID, entity type, module information of the network entity, and entity characteristics/specification, such as entity name, version, and functional status. The hierarchical relationships include relations indicative of: (1) association of each physical termination from T1 to T16 with its network equipment from E1 to E8; (2) association of each link from L1 to L8 with its A-end and Z-end physical terminations from T1 to T16; (3) association of each physical termination from T1 to T16 with a corresponding logical termination from LT1 to LT16; (4) association of each path from P1 to P14 with its logical terminations from LT1 to LT16; (5) association of the path P14 with the service type S1; and (6) association of each aggregated path, or the parent path, with its sub-paths, or the child paths. The hierarchical relationships are in the form of parent-child relations from the network equipment terminations at lowest level in hierarchy up to the service types at the highest level in hierarchy.

Based on the above description of hierarchical relationships, the state information of the network entities in the multi-domain network 200 are indicative of at least the following: (1) the physical termination T1 is associated with the network equipment E1, the physical terminations T7 and T9 are associated with the network equipment E4, and so on; (2) the link L1 is associated with the physical terminations T1 and T2, and the link L4 is associated with the physical terminations T6 and T8, and so on; (3) the physical termination T3 is associated with the logical termination LT3, the physical termination T11 is associated with the logical termination LT11, and so on; (4) the path P3 is associated with the logical terminations LT5 and LT7, the path P10 is associated with the logical terminations LT6 and LT12, and so on; (5) the service type S1 is associated with the path P14; and (6) the path P9 is a parent path having the paths P3 and P5 as child paths, the path P14 is a parent path having the paths P 13, P1 and P8 as child paths, and so on.

In an example, consider a case where a fault occurs in the logical termination LT5 in the multi-domain network 200, and the faulty logical termination LT5 generates an alarm message. Due to the faulty logical termination LT5, the related network entities, such as the path P3, the path P9, the path P11, the path P12, the path P13, and the path P14 turn faulty and generate respective alarm messages. The system 102 receives the alarm messages generated in the multi-domain network 200, and acquires the state information of the network entities traversed by each of the services across the multi-domain network 200. The system 102 picks up one of the alarm messages, for example, the alarm message associated with the faulty logical termination LT5, and identifies the logical termination LT5 in the state information. Then, the system 102 traverses the state information through the hierarchical relationships from the logical termination LT5 to identify the service type S1 that is related to the logical termination LT5. The system 102 then determines the service corresponding to the service type S1 as the impacted service. The system 102 repeats the process for each of the alarm messages, and determines all the services that are impacted in the multi-domain network 200.

After determining all the impacted services, the system 102 picks up one of the impacted services, for example, the service associated with the service type S1, and traverses the state information through the hierarchical relationships from the service type S1 towards the network equipment till the network entities that match with the faulty network entities, from the faulty path P 14 to the faulty logical termination LT5 are reached. The system 102 repeats the process for each of the impacted services. Since the logical termination LT5 is at the lowest level of hierarchy, from the faulty path P14 to the faulty logical termination LT5, the system 102 identifies the logical termination LT5 as the actual faulty network entity, or the root cause of the alarm messages.

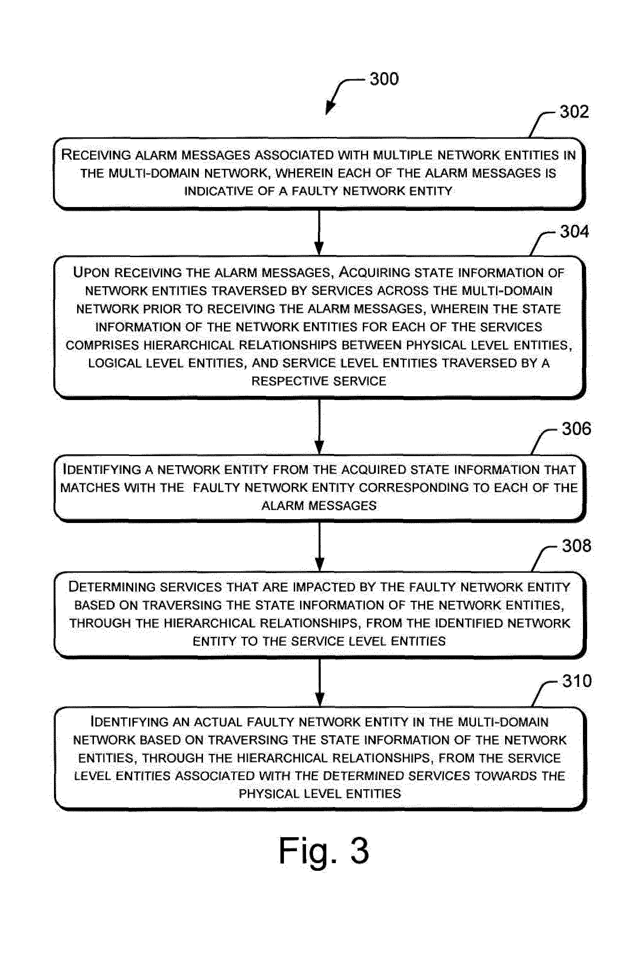

Fig. 3 illustrates an exemplary method for monitoring faults in a multi-domain network, in accordance with an implementation of the present subject matter. The order in which the method 300 is described is not intended to be construed as a limitation, and any number of the described method blocks can be combined in any order to implement the method 300 or any alternative method. Additionally, individual blocks may be deleted from the method 300 without departing from the scope of the subject matter described herein. Furthermore, the method 300 can be implemented in any suitable hardware, software, firmware, or combination thereof.

The method 300 may be described in the general context of computer executable instructions. Generally, computer executable instructions can include routines, programs, objects, components, data structures, procedures, modules, functions, etc., that perform particular functions or implement particular abstract data types. The method 300 may also be practiced in a distributed computing environment where functions are performed by remote processing devices that are linked through a communications network. In a distributed computing environment, computer executable instructions may be located in both local and remote computer storage media, including memory storage devices.

A person skilled in the art will readily recognize that steps of the method 300 can be performed by programmed computers. Herein, some implementations are also intended to cover program storage devices or computer readable medium, for example, digital data storage media, which are machine or computer readable and encode machine-executable or computer-executable programs of instructions, where said instructions perform some or all of the steps of the described method. The program storage devices may be, for example, digital memories, magnetic storage media, such as a magnetic disks and magnetic tapes, hard drives, or optically readable digital data storage media. The implementations are also intended to cover both communication network and communication devices to perform said steps of the method.

Although the method 300 for monitoring faults in a multi-domain network may be implemented in a variety of computing devices working in different network environments; in an implementation described in Fig. 3, the method 300 is explained in context of the aforementioned fault monitoring system 102 in the network environment 100 for the ease of explanation.

Referring to Fig. 3, at block 302, alarm messages associated with multiple network entities in the multi-domain network are received by the fault monitoring system 102. Each of the alarm messages is indicative of a faulty network entity in the multi-domain network.

Upon receiving the alarm messages, at block 304, state information of network entities traversed by services across the multi-domain network is acquired by the fault monitoring system 102. The state information of the network entities traversed prior to receiving the alarm messages is acquired by the fault monitoring system 102. As described earlier, the state information of the network entities for each of the services includes hierarchical relationships between physical level entities, logical level entities, and service level entities traversed by a respective service.

At block 306, a network entity from the acquired state information that matches with the faulty network entity corresponding to each of the alarm messages is identified. The network entity is identified by the fault monitoring system 102.

At block 308, services that are impacted by the faulty network entity are determined based on traversing the state information of the network entities, through the hierarchical relationships, from the identified network entity to the service level entities. The services that are impacted are determined by the fault monitoring system 102 in a manner as described earlier in the description.

Further, at block 310, an actual faulty network entity in the multi-domain network is identified based on traversing the state information of the network entities, through the hierarchical relationships, from the service level entities associated with the determined services towards the physical level entities. The state information is traversed till a network entity that matches with the faulty network entity corresponding to the each of the alarm messages is reached. The actual faulty network entity is identified by the fault monitoring system 102 in a manner as described earlier in the description.

Further, in an implementation, the network entities that are already traversed in the state information are tracked by the fault monitoring system 102. Further, in an implementation, while traversing the state information of the network entities, the network entities that lead to the service level entities are parsed. Further, in an implementation, a flag with a status indicative of a non-traversing entity is set for a predefined set of network entities in the state information, and, while traversing the state information, the network entities in the state information that are without the flag set with the status indicative of the non-traversing entity are parsed.

Although implementations for fault monitoring in a multi-domain network have been described in a language specific to structural features or method(s), it is to be understood that the present subject matter is not limited to the specific features or method(s) described. Rather, the specific features and methods are disclosed as implementations for fault monitoring in a multi-domain network.

## Claims

1. A method for monitoring faults in a multi-domain network, the method comprising:
receiving, by a processor (110), alarm messages associated with multiple network entities in the multi-domain network, wherein each of the alarm messages is indicative of a faulty network entity;
upon receiving the alarm messages, acquiring, by the processor (110), state information of network entities traversed by services across the multi-domain network prior to receiving the alarm messages, wherein the state information of the network entities for each of the services comprises hierarchical relationships between physical level entities, logical level entities, and service level entities traversed by a respective service;
identifying, by the processor (110), a network entity from the acquired state information that matches with the faulty network entity corresponding to each of the alarm messages; and
determining, by the processor (110), services that are impacted by the faulty network entity based on traversing the state information of the network entities, through the hierarchical relationships, from the identified network entity to the service level entities.

2. The method as claimed in claim 1, further comprising identifying, by the processor (110), an actual faulty network entity in the multi-domain network based on traversing the state information of the network entities, through the hierarchical relationships, from the service level entities associated with the determined services towards the physical level entities, wherein the state information is traversed till a network entity that matches with the faulty network entity corresponding to the each of the alarm messages is reached.

3. The method as claimed in claim 2, wherein the actual faulty network entity is the network entity at a lower most level based on the hierarchical relationships.

4. The method as claimed in claim 1, wherein the traversing the state information of the network entities comprises keeping a track of the network entities that are already traversed in the state information.

5. The method as claimed in claim 1, wherein the traversing the state information of the network entities comprises parsing the network entities that lead to the service level entities.

6. The method as claimed in claim 1, further comprises:
setting, by the processor (110), a flag with a status indicative of a non-traversing entity for a predefined set of network entities in the state information, wherein the traversing the state information of the network entities comprises parsing the network entities in the state information that are without the flag set with the status indicative of the non-traversing entity.

7. The method as claimed in claim 1, wherein the hierarchical relationships comprises:
relations between network equipment, physical terminations associated with the network equipment, links between the physical terminations, logical terminations corresponding to the physical terminations, paths between the logical terminations, and service types associated with the paths.

8. The method as claimed in claim 7, wherein the paths between the logical terminations comprises child paths and parent paths in a parent-child relationship, wherein each of the child paths is a direct path between two logical terminations, and wherein each of the parent paths is an aggregate path of at least two child paths.

9. A fault monitoring system (102) comprising:
a processor (110); and
a service impact analyzer (120) coupled to the processor (110) to:
receive alarm messages associated with multiple network entities in the multi-domain network, wherein each of the alarm messages is indicative of a faulty network entity;
acquire, upon receiving the alarm messages, state information of network entities traversed by services across the multi-domain network prior to receiving the alarm messages, wherein the state information of the network entities for each of the services comprises hierarchical relationships between physical level entities, logical level entities, and service level entities traversed by a respective service;
identify a network entity from the acquired state information that matches with the faulty network entity corresponding to each of the alarm messages,; and
determine services that are impacted by the faulty network entity based on traversing the state information of the network entities, through the hierarchical relationships, from the identified network entity to the service level entities.

10. The fault monitoring system (102) as claimed in claim 9, further comprising:
a root cause analyzer (122) coupled to the processor (110) to identify an actual faulty network entity in the multi-domain network based on traversing the state information of the network entities, through the hierarchical relationships, from the service level entities associated with the determined services towards the physical level entities, wherein the state information is traversed till a network entity that matches with the faulty network entity corresponding to the each of the alarm messages is reached.

11. The fault monitoring system (102) as claimed in claim 10, wherein the actual faulty network entity is the network entity at a lower most level based on the hierarchical relationships.

12. The fault monitoring system (102) as claimed in claim 9, wherein the service impact analyzer (120) is to keep a track of the network entities that are already traversed in the state information.

13. The fault monitoring system (102) as claimed in claim 9, wherein the service impact analyzer (120) is to:
set a flag with a status indicative of a non-traversing entity for a predefined set of network entities in the state information; and
parse the network entities in the state information that are without the flag set with the status indicative of the non-traversing entity.

14. A non-transitory computer-readable medium having embodied thereon a computer program for executing a method for monitoring faults in a multi-domain network, the method comprising:
receiving alarm messages associated with multiple network entities in the multi-domain network, wherein each of the alarm messages is indicative of a faulty network entity;
upon receiving the alarm messages, acquiring state information of network entities traversed by services across the multi-domain network prior to receiving the alarm messages, wherein the state information of the network entities for each of the services comprises hierarchical relationships between physical level entities, logical level entities, and service level entities traversed by a respective service;
identifying a network entity from the acquired state information that matches with the faulty network entity corresponding to each of the alarm messages; and
determining services that are impacted by the faulty network entity based on traversing the state information of the network entities, through the hierarchical relationships, from the identified network entity to the service level entities.

15. The non-transitory computer-readable medium as claimed in claim 14, wherein the method further comprises identifying an actual faulty network entity in the multi-domain network based on traversing the state information of the network entities, through the hierarchical relationships, from the service level entities associated with the determined services towards the physical level entities, wherein the state information is traversed till a network entity that matches with the faulty network entity corresponding to the each of the alarm messages is reached.
